Europäisches Patentamt

European Patent Office

Office européen des brevets

(11) Veröffentlichungsnummer: **0 013 412**
**B1**

(12) **EUROPÄISCHE PATENTSCHRIFT**

(45) Veröffentlichungstag der Patentschrift:
14.03.84

(21) Anmeldenummer: 79105328.3

(22) Anmeldetag: 21.12.79

(51) Int. Cl.³ **C 02 F 1/28**, C 02 F 1/40,
B 01 J 20/26, C 08 G 18/28,
C 08 G 18/36, C 08 G 18/38

(54) Verfahren zur Abtrennung von hydrophoben organischen Flüssigkeiten aus Wasser.

(30) Priorität: 15.01.79 DE 2901335

(43) Veröffentlichungstag der Anmeldung.
23.07.80 Patentblatt 80/15

(45) Bekanntmachung des Hinweises auf die Patenterteilung:
14.03.84 Patentblatt 84/11

(84) Benannte Vertragsstaaten:
AT BE CH DE FR GB IT NL SE

(56) Entgegenhaltungen:
EP - A - 0 000 933
DE - A - 2 354 939
DE - A - 2 519 959
DE - A - 2 550 818
US - A - 3 178 300
US - A - 3 248 349
US - A - 3 617 551

DIE ANGEWANDTE MAKROMOLEKULARE CHEMIE,
Band 78, No. 78, 1979.04 Seiten 67-71 Basel CH JARRE
et al.: "Polyurethanschäume mit hohem
Ölabsorptionsvermögen"

(73) Patentinhaber: BASF Aktiengesellschaft,
Carl-Bosch-Strasse 38, D-6700 Ludwigshafen (DE)

(72) Erfinder: De Beuckelaer, Gerard, Auf'm Kies 2,
D-6719 Weisenheim (DE)
Erfinder: Jarre, Wolfgang, Dr. Dipl.-Chem.,
Limesstrasse 3, D-6700 Ludwigshafen (DE)
Erfinder: Wurmb, Rolf, Dr. Dipl.-Chem., Kastellweg 10,
D-6900 Heidelberg (DE)
Erfinder: Marx, Matthias, Dr. Dipl.-Chem., Seebacher
Strasse 49, D-6702 Bad Duerkheim 1 (DE)

## Verfahren zur Abtrennung von hydrophoben organischen Flüssigkeiten aus Wasser

Die Erfindung betrifft ein Verfahren zur drucklosen Abtrennung von hydrophoben organischen Flüssigkeiten aus Wasser mit Hilfe eines säulenförmigen Reaktionsgefäßes, das in loser Schüttung oder durch Stapelung vollständig mit hydrophoben offenzelligen Polyurethan-Schaumstoffpartikeln gefüllt ist, so daß 50 bis 95 Volumenprozent des Gesamtvolumens aus Polyurethan-Schaumstoffpartikeln bestehen. Der als Absorptionsmittel verwendbare Polyurethanschaumstoff enthält gebunden 2 bis 50 Gewichtsprozent einer hydrophobierend wirkenden Verbindung, ist reversibel deformierbar und wird durch sein Eigengewicht im beladenen Zustand und durch das Gewicht des verunreinigten Wassers zu weniger als 25% gestaucht.

Die Reinigung von Wasser von hydrophoben Verunreinigungen, wie organischen Lösungsmitteln und insbesondere die Trennung von Rohöl-Wasser-Gemischen gehört zu den zentralen Umweltschutzproblemen. Derartige Trennprobleme treten nicht nur bei Ölunfällen auf See auf, sondern auch bei störungsfreien Öltransporten, beispielsweise beim Abpumpen von ölhaltigem Ballastwasser aus Öltankern. Hierzu finden vorwiegend mechanische Trennmethoden auf Basis der Schwerkrafttrennung Anwendung. Nachteilig ist hierbei der erforderliche hohe Raum- und Zeitbedarf.

Es ist ferner vorgeschlagen worden, zur Ölabsorption von Wasseroberflächen offenzellige Schaumstoffe aus Polyurethanen, Harnstoff-Formaldehydkondensaten, Polystyrol, Celluloseacetat u. a. zu verwenden. Nach Angaben der US-PS 3 779 908 läßt man zur Ölabsorption eine Dispersion von Rohöl in Wasser durch einen flexiblen, offenzelligen Schaumstoff fließen. Oleophile halbharte bis harte Schaumstoffe werden ferner gemäß US-PS 3 886 067 auf ölhaltigen Wasseroberflächen verteilt und nach erfolgter Ölabsorption an den Schaumstoff wieder gesammelt und entfernt.

Hiebei werden jedoch als Filtermaterialien übliche Schaumstoffe oder Schaumstoffabfälle verwendet, die nur ein geringes Ölabsorptionsvermögen besitzen.

Zur Verbesserung des Ölaufnahmevermögens werden gemäß US-PS 3 681 237 dieSchaumstoffe mit hydrophoben Agenzien oberflächlich beschichtet. Nachteilig ist hierbei, daß die hydrophoben Agenzien relativ rasch ausgewaschen und dadurch unwirksam werden.

Zur Behebung dieses Nachteils werden in der EP-A-933 hydrophobe Polyurethan-Schaumstoffe zur Ölabsorption beschrieben, die eine Dichte von 8 bis 25 g/Liter besitzen und die Zahl der geschlossenen Zellen zur Zahl der offenen Zellen 3 bis 30% zu 97 bis 70% beträgt, bei denen lipophile Verbindungen in das Polyurethan-Schaumstoffgerüst eingebaut werden. Die Produkte weisen ein hohes Ölabsorptionsvermögen auf und eignen sich insbesondere zur Ölabsorption aus Wasseroberflächen. Aufgrund ihrer niederen Dichte sind die Schaumstoffe jedoch nur begrenzt reversibel deformierbar und können daher nur begrenzt ausgepreßt und erneut zur Ölabsorption eingesetzt werden.

Die genannten Schaumstoffe weisen gemeinsam den Nachteil auf, daß sie als Filtermaterial wenig geeignet sind, da derartige Filterschichten nur eine geringe Durchflußgeschwindigkeit erlauben und bei zunehmender Belegung mit Öl oder hydrophoben Lösungsmitteln rasch verstopfen. Da jedoch gerade beim Abpumpen von Ballastwasser oder bei Ölunfällen sehr hohe Durchflußgeschwindigkeiten die Voraussetzung für einen praxisgerechten Einsatz bilden, mußten Methoden zur Beseitigung dieser Mängel gesucht werden.

In diesem Zusammenhang soll nicht unerwähnt bleiben, daß selbstverständlich auch die Herstellung von Polyurethan-Schaumstoffen aus Polyisocyanaten, Polyhydroxyverbindungen, gegebenenfalls Kettenverlängerungsmitteln, Hilfs- und Zusatzstoffen aus zahlreichen Patent- und Literaturveröffentlichungen bekannt ist. Verweisen möchten wir beispielsweise auf die Monographien von J. H. Saunders und K. C. Frisch, High Polymers, Band XVI »Polyurethanes« Teil I und II (Verlag Interscience Publishers, New York) und R. Vieweg und A. Höchtlen, Kunststoff-Handbuch, Band VII, Polyurethane, Carl Hanser Verlag, München.

Aufgabe der vorliegenden Erfindung war es, eine wirksame Methode zur Abtrennung von hydrophoben organischen Verunreinigungen, insbesondere organischen unpolaren Lösungsmitteln und Ölen, aus Wasser zu entwickeln, die einerseits hohe Durchflußgeschwindigkeiten auch bei zunehmender Belegung des Filtermaterials gestattet und wobei andererseits Filtermaterialien Anwendung finden sollten, die ein hohes Ölabsorptionsvermögen aufweisen, reversibel deformierbar sind, so daß sie mehrfach ausgepreßt und danach erneut als Filtermaterial eingesetzt werden können und die im beladenen Zustand nur eine geringe Stauchung zeigen.

Diese Aufgabe wurde gelöst, durch ein Verfahren zur Abtrennung von hydrophoben organischen Flüssigkeiten aus Wasser, wobei man das verunreinigte Wasser drucklos durch ein mit Polyurethan-Schaumstoffpartikeln gefülltes, säulenförmiges Reaktionsgefäß strömen läßt und anschließend die absorbierte hydrophobe, organische Flüssigkeit aus den Polyurethan-Schaumstoffpartikeln auspreßt, das dadurch gekennzeichnet ist, daß das Reaktionsgefäß mit Polyurethan-Schaumstoffpartikeln aus einem hydrophoben offenzelligen Polyurethan-Schaumstoff, der

a) 2 bis 50 Gewichtsprozent, bezogen auf das Gesamtgewicht des Polyisocyanats und Polyols, einer hydrophobierend wirkenden Verbindung, die mindestens eine Gruppe mit einem Zerewitinoff aktiven Wasserstoffatom besitzt und die einen Löslichkeitsparameter von 15,375 bis 21,525

**0 013 412**

$(J. cm^{-3})^{1/2}$ aufweist, aus der Gruppe der
gegebenenfalls substituierten, gesättigten und ungesättigten aliphatischen Fettsäuren mit 10 bis 25 Kohlenstoffatomen im Molekül sowie deren Derivate,
Alkylenoxidanlagerungsprodukte an Fettsäureester und -amide oder
Butadienoligomeren mit Molekulargewichten von 500 bis 10 000, gebunden enthält, und der
b) reversibel deformierbar ist und im mit hydrophoben, organischen Flüssigkeiten beladenen Zustand durch sein Eigengewicht und das Gewicht des verunreinigten Wassers zu weniger als 25% gestaucht wird,

in loser Schüttung oder durch Stapelung so gefüllt wird, daß bei vollständiger Füllung 50 bis 95 Volumenprozent des Gesamtvolumens aus Polyurethan-Schaumstoffpartikeln bestehen.

Zu den zur Herstellung der hydrophoben, vorzugsweise offenzelligen Polyurethan-Schaumstoffe verwendbaren Aufbaukomponenten ist folgendes auszuführen:

Als organische Polyisocyanate kommen beispielsweise aliphatische, cycloaliphatische und vorzugsweise aromatische Di- und Polyisocyanate in Frage. Im einzelnen seien z. B. genannt aliphatische Diisocyanate, wie Hexandiisocyanat-1,6, Decan-diisocyanat-1,10 und Dodecan-diisocyanat-1,12, cycloaliphatische Diisocyanate, wie 1,4-Cyclohexan-diisocyanat, Isophoron-diisocyanat und Dicyclohexyl-methan-diisocyanate und vorzugsweise aromatische Di- und Polyisocyanate, wie 2,4- und 2,6-Toluylen-diisocyanat sowie die handelsüblichen Isomerengemische, 2,4'-, 4,4'- und 2,2'-Diphenylmethan-diisocyanat und deren Isomerengemische, Mischungen aus Toluylen-diissocyanaten und Diphenylmethan-diisocyanat-Isomerengemischen und Mischungen aus Toluylen-diisocyanaten und Gemischen aus Diphenylmethan-diisocyanaten und Polyphenyl-polymethylen-polyisocyanaten (Roh-MDJ). Vorzugsweise verwendet werden jedoch technische Mischungen aus Diphenylmethan-diisocyanaten und Polyphenyl-polymethylen-polyisocyanaten (Roh-MDJ), insbesondere solche mit einem Diphenylmethan-diisocyanat-Isomerengehalt von 40 bis 95 Gewichtsprozent und Mischungen aus Toluylen-diisocyanaten und Roh-MDJ.

Als Polyole kommen vorzugsweise Polyesterole und insbesondere Polyätherole mit einer Funktionalität von 2 bis 3,5 und Molekulargewichten von 400 bis 7500, vorzugsweise von 2000 bis 4500, in Betracht. Verwendet werden können jedoch auch andere hydroxylgruppenhaltige Polymere mit den genannten Funktionalitäten und Molekulargewichten, beispielsweise Polycarbonate, insbesondere solche, hergestellt aus Diphenylcarbonat und Hexandiol-1,6 durch Umesterung, Polyoxyacetale und Polyesteramide.

Geeignete Polyesterole können beispielsweise aus Dicarbonsäuren, vorzugsweise aliphatischen Dicarbonsäuren, mit 2 bis 12, vorzugsweise 4 bis 8 Kohlenstoffatomen im Alkylenrest und mehrwertigen Alkoholen, vorzugsweise Diolen, hergestellt werden. Genannt seien beispielhaft aliphatische Dicarbonsäuren, wie Glutarsäure, Pimelinsäure, Korksäure, Azelainsäure, Sebacinsäure, Undecandisäure, Dodecandisäure und vorzugsweise Bernstein- und Adipinsäure und aromatische Dicarbonsäuren, wie Phthalsäure und Terephthalsäure. Gegebenenfalls kann es zweckmäßig sein, zusätzlich in kleinen Mengen langkettige monofunktionelle Carbonsäuren, z. B. Ölsäure oder 2-Äthylhexansäure, mitzuverwenden. Beispiele für zwei- und mehrwertige, insbesondere dreiwertige Alkohole sind: Äthylenglykol, Diäthylenglykol, 1,2- bzw. 1,3-Propylenglykol, Dipropylenglykol, Decandiol-1,10, Glycerin, Trimethylolpropan, Pentaerythrit und vorzugsweise Butandiol-1,4 und Hexandiol-1,6. Sofern zur Herstellung der im wesentlichen linearen Polyesterole mehrwertige, insbesondere dreiwertige Alkohole mitverwendet werden, muß deren Gehalt so berechnet werden, daß die Funktionalität der erhaltenen Polyesterole maximal 3,5 ist und die OH-Zahl vorzugsweise kleiner als 200 ist.

Vorzugsweise als Polyole verwendet werden jedoch Polyätherole, die nach bekannten Verfahren aus einem oder mehreren Alkylenoxiden mit 2 bis 4 Kohlenstoffatomen im Alkylenrest und einem Startermolekül, das 2 bis 4, vorzugsweise 3 aktive Wasserstoffatome enthält, hergestellt werden. Geeignete Alkylenoxide sind beispielsweise Tetrahydrofuran, 1,3-Propylenoxid, 1,2- bzw. 2,3-Butylenoxid, Styroloxid und vorzugsweise Äthylenoxid und 1,2-Propylenoxid. Die Alkylenoxide können einzeln, alternierend nacheinander oder als Mischungen verwendet werden. Als Startermoleküle kommen beispielsweise in Betracht: Wasser, Dicarbonsäuren, wie Bernsteinsäure, Adipinsäure, Phthalsäure und Terephthalsäure, unsubstituierte und gegebenenfalls N,N'-dialkylsubstituierte Diamine mit 1 bis 4 Kohlenstoffatomen im Alkylrest, wie unsubstituiertes und gegebenenfalls dialkylsubstituiertes Äthylendiamin, 1,2- bzw. 1,3-Propylendiamin, 1,4-Butylendiamin, 1,6-Hexamethylendiamin, 4,4'-, 2,4'- und 2,2'-Diaminodiphenylmethan sowie N-Alkyl-diäthanolamine, Trialkanolamine und vorzugsweise mehrwertige, insbesondere zwei- und dreiwertige Alkohole, wie Äthylenglykol, Propylenglykol, Diäthylenglykol, Dipropylenglykol, Butylenglykol-1,4, Hexamethylenglykol-1,6, Glycerin, Trimethylolpropan und Pentaerythrit.

Bevorzugt verwendet werden trifunktionelle Polyätherole mit Molekulargewichten von 400 bis 7500, vorzugsweise von 2000 bis 4500 und Hydroxylzahlen von 20 bis 200, vorzugsweise von 25 bis 80, die sowohl Äthylenoxid- als auch 1,2-Propylenoxideinheiten in der Oxyalkylenkette enthalten, wobei diese entweder statistisch oder blockweise in der Oxyalkylenkette angeordnet sein können. Insbesondere eingesetzt werden solche Propylenoxid-Äthylenoxid-Polyätherole mit einem Äthylenoxidgehalt von kleiner als 50 Gewichtsprozent, vorzugsweise kleiner als 20 Gewichtsprozent, bezogen auf das Ge-

3

**0 013 412**

samtgewicht der Mischung.

Zur Herstellung der hydrophoben offenzelligen Polyurethan-Schaumstoffe kann es gegebenenfalls zweckmäßig sein, neben Polyolen zusätzlich di- bis tetrafunktionelle Kettenverlängerungsmittel oder Vernetzungsmittel mitzuverwenden. Als Kettenverlängerungsmittel kommen insbesondere aliphatische Diole mit 2 bis 6 Kohlenstoffatomen, wie Äthylenglykol, 1,4-Butylenglykol, 1,6-Hexamethylenglykol, Dipropylenglykol und Dibutylenglykol und aromatisch-aliphatische Diole wie Di-($\beta$-Hydroxyäthyl)-hydrochinon in Betracht. Zur Erhöhung der Schaumhärte können ferner tri- bis tetrafunktionelle Alkohole mit OH-Zahlen von 200 bis 800, beispielsweise Glycerin, Trimethylolpropan, Pentaerythrit und Umsetzungsproduke von Alkylenoxiden mit Äthylendiamin sowie Äthylendiamin als Vernetzungsmittel mitverwendet werden. Bewährt haben sich beispielsweise Mischungen aus Polyolen und Kettenverlängerungsmittel oder Vernetzurgsmittel im Gewichtsverhältnis 60 : 40 bis 98 : 2, vorzugsweise 85 : 15 bis 97 : 3.

Als hydrophobierend wirkende Zusätze verwendet man oleophile Verbindungen mit Löslichkeitsparametern von 15,375 bis 21,525 $(J \cdot cm^{-3})^{1/2}$, vorzugsweise von 17,425 bis 20,5 $(J \cdot cm^{-3})^{1/2}$, die mindestens eine Gruppe mit einem Zerewitinoff-aktiven Wasserstoffatom, beispielsweise eine $-SH$, $-NH$, $-COOH$ und vorzugsweise $-NH_2$ und $-OH$-Gruppe besitzen und auf diese Weise ins Polyurethan-Schaumsstoffgerüst eingebaut werden. Genannt seien gegebenenfalls substituierte, gesättigte und ungesättigte, aliphatische Fettsäuren mit 10 bis 25, vorzugsweise 12 bis 20 Kohlenstoffatomen im Molekül sowie deren Derivate, vorzugsweise deren Ester mit Diolen und Triolen mit 2 bis 20 Kohlenstoffatomen im Alkoholrest und Amide. Im einzelnen seien beispielhaft genannt: Fettsäuren, wie Caprin-, Laurin-, Myristin-, Palmitin-, Stearin-, Arachin-, Lignocerin-, Palmitolein-, Öl-, Ricinolein-, Linolsäure und Linolensäure; Fettsäureester, wie Ricinusöl, Tallöl, Addukte aus den genannten Fettsäuren und Propylen- und/oder Äthylenoxid und mehrwertigen Alkoholen, beispielsweise Äthylenglykol, Butandiol-1,4, Hexandiol-1,6 und Glycerin und Fettsäureamide mit Mono- und Dialkanolaminen, wie Ölsäuremono- und -diäthanolamid, Ricinolsäuremono- und -diäthanolamid sowie deren N,N-Dialkylamide, wie Ricinolsäure-dimethylaminopropylamid.

Auch Alkylenoxidanlagerungsprodukte an Fettsäureester und -amide führen zu verwendbaren hydrophobierend wirkenden Substanzen.

Als weitere hydrophobierend wirkende Verbindungsklasse seien Butadienoligomere mit Molekulargewichten von 500 bis 10 000, vorzugsweise 1500 bis 3500, genannt, die mindestens eine mit NCO-Gruppen reagierende funktionelle Gruppe aufweisen.

Besonders bewährt und daher vorzugsweise verwendet werden insbesondere das Ölsäure-diäthanolamid und ein Polybutadiendiol mit einem Molekulargewicht von ungefähr 2500.

Die hydrophobierend wirkenden Verbindungen kommen in Mengen von 2 bis 50 Gewichtsprozent, vorzugsweise von 10 bis 30 Gewichtsprozent, bezogen auf das Gesamtgewicht von Polyisocyanaten und Polyolen zur Anwendung.

Als Treibmittel wird Wasser verwendet, das mit Isocyanatgruppen unter Bildung von Kohlendioxid reagiert. Vorzugsweise werden 0,5 bis 5 Gewichtsprozent, insbesondere 1,5 bis 3,5 Gewichtsprozent Wasser, bezogen auf das Gewicht des Polyols verwendet. Anstelle von Wasser allein können auch Mischungen aus Wasser und chemisch inerten, niedrigsiedenden, gegebenenfalls halogenierten Kohlenwasserstoffen als Treibmittel angewandt werden. In Betracht kommen beispielsweise gegebenenfalls halogenierte Kohlenwasserstoffe mit Siedepunkten unter 50°C, vorzugsweise zwischen $-50°C$ und 30°C bei Atmosphärendruck. Im einzelnen seien beispielhaft genannt, halogenierte Kohlenwasserstoffe, wie Monochloridfluormethan, Dichlormonofluormethan, Dichlordifluormethan und Trichlorfluormethan und deren Gemische und Kohlenwasserstoffe, wie Propan und Isobutan sowie Dimethyläther. Geeignete Mischungen aus Wasser und gegebenenfalls halogenierten Kohlenwasserstoffen bestehen im allgemeinen aus 5 bis 70 Gewichtsprozent, vorzugsweise 10 bis 50 Gewichtsprozent, Wasser und 30 bis 95 Gewichtsprozent, vorzugsweise 50 bis 90 Gewichtsprozent, gegebenenfalls halogenierten Kohlenwasserstoffen, wobei die Gewichtsprozent bezogen sind auf das Gesamgewicht der Treibmittelmischung. Die erforderlichen Mengen an Treibmittelmischung lassen sich auf einfache Weise in Abhängigkeit vom Mischungsverhältnis Wasser zu gegebenenfalls halogeniertem Treibmittel sowie der gewünschte Schaumstoffdichte experimentell ermitteln und betragen ungefähr 2 bis 40, vorzugsweise 5 bis 25 Gewichtsprozent, bezogen auf das Polyolgewicht.

Dem schaumfähigen Reaktionsgemisch können ferner Katalysatoren, die die Polyurethanbildung beschleunigen und gegebenenfalls Zusatzstoffe, wie sie üblicherweise zur Herstellung von Polyurethan-Schaumstoffen Anwendung finden, einverleibt werden. In Betracht kommen beispielsweise oberflächenaktive Stoffe, Porenregler, Antioxidationsmittel, Hydrolysenschutzmittel, Farbstoffe, Füllstoffe und andere Zusätze.

Geeignete Katalysatoren zur Beschleunigung der Umsetzung zwischen den Polyolen, dem Wasser, gegebenenfalls Kettenverlängerungsmitteln und den Polyisocyanaten sind beispielsweise tertiäre Amine, wie Dimethylbenzylamin, N,N,N'N'-Tetramethyl-diamino-äthyläther, Bis-(dimethylaminopropyl)-harnstoff, N-Methyl- bzw. N-Äthylmorpholin, Dimethylpiperazin, 1,2-Dimethylimidazol, 1-Azobicyclo-(3,3,0)-octan und vorzugsweise Triäthylendiamin, Metallsalze, wie Zinndioctoat, Bleioctoat, Zinn-diäthylhexoat und vorzugsweise Zinn-(II)salze und Dibutylzinndilaurat sowie insbesondere Mischungen aus tertiären Aminen und organischen Zinnsalzen. Vorzugsweise verwendet werden 0,5 bis 5

4

. Gewichtsprozent Katalysator auf Basis tertiärer Amine und/oder 0,05 bis 2,5 Gewichtsprozent Metallsalze, bezogen auf das Polyolgewicht.

In Betracht kommen ferner beispielsweise oberflächenaktive Substanzen, welche zur Unterstützung der Homogenisierung der Ausgangsstoffe dienen und gegebenenfalls auch geeignet sind, die Zellstruktur der Polyurethan-Schaumstoffe zu regulieren. Genannt seien beispielhaft Siloxan-Oxyalkylen-Mischpolymerisate und andere Organopolysiloxane, oxäthylierte Alkylphenole, oxäthylierte Fettalkohole, Paraffinöle, Ricinusöl- bzw. Ricinolsäureester und Türkischrotöl, die in Mengen von 0,2 bis 6 Gewichtsteilen pro 100 Gewichtsteilen Polyisocyanatmischung angewandt werden.

Nähere Angaben über die obengenannten anderen üblichen Zusatzstoffe sind der Fachliteratur, beispielsweise der Monographie von J. H. Saunders und K. C. Frisch »High Polymers« Band XVI, Polyurethanes, Teil 1 und 2, Verlag Interscience Publishers 1962 bzw. 1964, zu entnehmen.

Die hydrophoben offenzelligen, reversibel deformierbaren Polyurethan-Schaumstoffe können nach dem Präpolymer- und vorzugsweise nach dem one-shot-Verfahren hergestellt werden.

Erfolgt die Herstellung der Schaumstoffe nach dem one-shot-Verfahren, so wird üblicherweise eine Mischung aus Polyol, den hydrophobierend wirkenden Verbindungen, Wasser, Katalysator und gegebenenfalls Kettenverlängerungsmittel und Zusatzstoffen mit den Polyisocyanaten bei Temperaturen von 15 bis 60°C, vorzugsweise von 25 bis 40°C in solchen Mengen zur Umsetzung gebracht, daß das Verhältnis von Hydroxylgruppen der Polyole und gegebenenfalls Kettenverlängerungsmittel oder Vernetzungsmittel sowie der Zerewitinoff-aktiven Wasserstoffatome der hydrophobierend wirkenden Verbindung zu NCO-Gruppen der Polyisocyanate 0,1 bis 0,4 : 1 beträgt und das Verhältnis sämtlicher reaktiver Wasserstoffatome — gebunden an Polyol, hydrophobierend wirkender Zusätze, Wasser und gegebenenfalls Kettenverlängerungsmittel oder Vernetzungsmittel — zu NCO-Gruppen ungefähr 0,7 bis 1,3 : 1, vorzugsweise 0,9 bis 1,1 : 1 ist. Bei Verwendung einer Mischkammer mit mehreren Zulaufdüsen können die flüssigen Ausgangsstoffe einzeln oder, sofern die Komponenten fest sind, in Form von Lösungen oder Suspensionen zugeführt und in der Mischkammer intensiv vermischt werden. Als besonders zweckmäßig hat es sich jedoch erwiesen, nach dem Zweikomponenten-Verfahren zu arbeiten und die Mischung aus Polyol, hydrophobierend wirkender Verbindung, Wasser, Katalysator, gegebenenfalls Kettenverlängerungsmittel und Zusatzstoffe zu der Komponente A zu vereinigen und als Komponente B die erfindungsgemäße Polyisocyanatmischung zu verwenden.

Zur Herstellung der NCO-gruppenhaltigen Präpolymeren werden die Polyisocyanate mit den bereits genannten Polyolen und/oder Kettenverlängerungsmitteln oder Vernetzungsmittel in solchen Mengen zur Umsetzung gebracht, daß das Verhältnis von NCO-Gruppen zu Gesamthydroxyl 5 : 1 bis 95 : 1, vorzugsweise 10 : 1 bis 90 : 1 beträgt. Die erhaltenen Präpolymeren werden anschließend mit hydrophobierend wirkenden Verbindungen, Wasser oder Mischungen aus Wasser und niedrigsiedenden, gegebenenfalls halogenierten Kohlenwasserstoffen und gegebenenfalls zusätzlichen Polyolen und/oder Kettenverlängerungsmitteln und Zusatzstoffen gemischt und aufschäumen lassen.

Die erhaltenen hydrophoben Polyurethan-Schaumstoffe besitzen Raumgewichte von 15 bis 200 g/l, vorzugsweise von 30 bis 60 g/l und sind offenzellig und daher reversibel deformierbar. Wesentliche Voraussetzung für ihre Verwendungsmöglichkeit zur Abtrennung von hydrophoben Flüssigkeiten aus Wasser ist jedoch, daß die Polyurethan-Schaumstoffe bzw. die daraus hergestellten Polyurethan-Schaumstoffpartikel im mit den hydrophoben, organischen Flüssigkeiten, beispielsweise Toluol, Benzol, Hexan, n-Octan, Petroläther, Dieselöl, Chloroform, Tetrachlorkohlenstoff, Anilin und insbesondere Öl, beladenen Zustand durch ihr Eigengewicht und das Gewicht der Wassersäule zu weniger als 25%, vorzugsweise zu 5% bis maximal 20% gestaucht werden. Können die Schaumstoffe stärker gestaucht werden, so kann es vorkommen, daß die absorbierten hydrophoben Flüssigkeiten durch das Eigengewicht der beladenen Schaumstoffe und der Wassersäule wieder ausgepreßt werden.

Die hydrophoben Polyurethan-Schaumstoffe können beispielsweise durch Stanzen, Fräsen, Sägen oder Schneiden zu Polyurethan-Schaumstoffpartikeln verarbeitet werden. Derartige Polyurethan-Schaumstoffpartikel können gegebenenfalls auch durch direktes Formschäumen hergestellt werden.

Die zur Füllung des säulenförmigen Reaktionsgefäßes geeigneten Polyurethan-Schaumstoffpartikel können die Form von Kugeln, Zylindern, Kegeln, Ringen oder Tabletten oder Mischungen aus den genannten Formen aufweisen. Bevorzugt Verwendung finden Kugeln und Zylinder. Bei der Verwendung von kugelförmigen Schaumstoffpartikeln weisen die Kugeln im allgemeinen einen Durchmesser von 5 bis 200, vorzugsweise von 10 bis 100 mm auf. Als zylinderförmige Füllkörper werden im allgemeinen Zylinder mit einer Länge von 10 bis 200 mm und einem Durchmesser von 5 bis 200 mm verwendet. Nicht kugel- oder zylinderförmige Füllkörper weisen im allgemeinen ein Volumen auf, das in etwa dem der zylinderförmigen Schaumstoffpartikel entspricht.

Die Polyurethan-Schaumstoffpartikel werden in säulenförmige Reaktionsgefäße, deren Querschnitt eine beliebige Form, beispielsweise die Form eines Quadrats, Rechtecks, Prismas, einer Ellipse oder insbesondere eines Kreises aufweisen kann, eingebracht. Vorzugsweise verwendet man jedoch langgestreckte zylinderförmige Reaktionsgefäße, die ein Verhältnis von Innendurchmesser zu Länge von ungefähr 1 : 0,5 bis 1 : 10, vorzugsweise 1 : 1 bis 1 : 6, besitzen und senkrecht stehend angeordnet sind.

Zur Erzielung hoher Durchflußgeschwindigkeiten und Vermeidung von Verstopfungen ist erfindungswesentlich, daß die säulenförmigen Reaktionsgefäße mit den Polyurethan-Schaumstoffpartikeln in Abhängigkeit von deren Raumform in loser Schüttung oder durch Stapelung so gefüllt werden, daß bei vollständiger Füllung 50 bis 95 Volumenprozent, vorzugsweise 70 bis 90 Volumenprozent, bezogen auf das Gesamtvolumen des Reaktionsgefäßes, aus Polyurethan-Schaumstoffpartikeln bestehen, d. h. daß das Reaktionsgefäß so bepackt wird, daß pro Volumeneinheit das Verhältnis von Volumenteilen Polyurethan-Schaumstoffpartikeln zu Leervolumen 1 : 1 bis 95 : 5, vorzugsweise 7 : 1 bis 9 : 1 beträgt.

Um ein zyklisches Auspressen der mit hydrophoben Flüssigkeiten beladenen Polyurethan-Schaumstoffpartikeln zu ermöglichen, wird das Reaktionsgefäß zweckmäßigerweise mit einer geeigneten Abpreßvorrichtung versehen.

Zur Abtrennung der hydrophoben, organischen Flüssigkeiten aus Wasser wird das mit den hydrophoben Polyurethan-Schaumstoffpartikeln gefüllte Reaktionsgefäß von oben mit dem verunreinigten Wasser beschickt. Die Durchflußgeschwindigkeit ist abhängig vom Belegungsgrad der Polyurethan-Schaumstoffpartikeln mit hydrophober organischer Flüssigkeit und beträgt durchschnittlich 5 bis 300 m³/m² pro Stunde, vorzugsweise 20 bis 100 m³/m² pro Stunde. Sobald die Polyurethan-Schaumstoffpartikel einen Sättigungsgrad von ungefähr 60—90%, vorzugsweise 70—80% erreicht haben, stoppt man den Zufluß von verunreinigtem Wasser, läßt das Reaktionsgefäß leerfließen und preßt anschließend die Polyurethan-Schaumstoffpartikel aus. Die Polyurethan-Schaumstoffpartikel können mehrfach, beispielsweise 10- bis 1000, insbesondere 50- bis 250fach ausgepreßt und erneut als Absorptionsmaterial eingesetzt werden.

Das erfindungsgemäße Verfahren eignet sich zur Abtrennung von hydrophoben organischen Flüssigkeiten, insbesondere Rohöl, aus Wasser. Es findet vorzugsweise Anwendung bei der Bekämpfung von Ölunfällen auf See, zur Ballastwasserreinigung von Tankern und bei der Reinigung von industriellen Abwässern.

Die in den Beispielen genannten Teile beziehen sich auf das Gewicht. Volumenteile verhalten sich zu Gewichtsteilen wie kg zu Litern.

## Beispiel 1

### Polyurethan-Schaumstoffherstellung

| | |
|---|---|
| 15 Teile | Ölsäurediäthanolamid |
| 85 Teile | eines handelsüblichen trifunktionellen Polyätherols auf Basis Glycerin, Propylenoxid und Äthylenoxid mit einer Hydroxylzahl von ungefähr 35 |
| 4 Teile | eines tetrafunktionellen Polyätherols auf Basis Äthylendiamin-Propylenoxid mit einer Hydroxylzahl von ungefähr 480 |
| 2,7 Teile | Wasser |
| 0,2 Teile | Bis-[2-(N,N-dimethylamino)äthyl]-äther |
| 0,1 Teile | Triäthylendiamin |
| 1 Teil | eines Polyäthersilikon-Blockcopolymeren (®Tegostab B 4690 der Goldschmidt AG, Essen) und |
| 0,05 Teile | Dibutylzinn-dilaurat |

werden innig vermischt und mit

42,85 Teilen einer Mischung aus 2,4- und 2,6-Toluylendiisocyanat (Isomerenverhältnis 80 : 20) und Roh-MDJ im Gewichtsverhältnis 80 : 20 zur Reaktion gebracht bei 25°C.

Die schaumfähige Reaktionsmischung läßt man in einer geschlossenen Form ausreagieren. Man erhält einen reversibel deformierbaren Polyurethan-Schaumstoff mit einem Raumgewicht von 50 g/Liter, der zu zylinderischen Formkörpern mit einem Durchmesser von 1 cm und einer Höhe von 1 cm verarbeitet wird.

### Füllung des Reaktionsgefäßes

In eine senkrecht stehende Füllkörpersäule mit einem Durchmesser von 10 cm und einer Höhe von 60 cm wird zunächst in kompakter Form ein hydrophober Polyurethan-Schaumstoffzylinder mit dem Durchmesser der Füllkörpersäule und einer Höhe von 15 cm (Gewicht: 55 g) als Boden eingebracht. Die restlichen 45 cm bis zur Gesamthöhe von 60 cm der Füllkörpersäule werden mit 130 g der oben beschriebenen zylinderförmigen Polyurethan-Schaumstoffpartikeln in loser Schüttung gefüllt. Das Verhältnis von mit Polyurethan-Schaumstoffpartikeln gefülltem Volumen zu Leervolumen betrug ungefähr 80 : 20.

Die Füllkörpersäule wurde mit einer Mischung aus 95 Gewichtsteilen Wasser und 5 Gewichtsteilen einer Rohölqualität, die frei von Benzinkohlenwasserstoffen war (Viskosität: 550 cPs (0,55 Pas) bei 22°C und Dichte 0,89 g/cm³), über eine Kreiselpumpe beschickt. Es wurde die Durchflußgeschwindig-

keit über eine Versuchszeit von 15 Minuten bestimmt.

Anschließend wurde der Polyurethan-Schaumstoff ausgepreßt und erneut als Filtermaterial eingesetzt. Dieser Vorgang wurde 10mal wiederholt und hierbei die mittlere Ölaufnahme bestimmt.

## Beispiel 2

Man verfährt analog den Angaben von Beispiel 1, stellt den hydrophoben Polyurethan-Schaumstoff jedoch aus folgenden Ausgangskomponenten her:

| | |
|---|---|
| 30 Teilen | eines Polybutadiendiols (Äquivalenzgewicht 1250, ®Polybd R-45 M der Atlantic Richfield Comp. Corp., Philadelphia) |
| 70 Teilen | eines Polyätherols auf Basis Glycerin, Äthylenoxid, Propylenoxid mit einer Hydroxylzahl von 28 |
| 3 Teilen | Wasser |
| 0,2 Teilen | eines Aminkatalysators (®Desmorapid PV der Bayer AG, Leverkusen) |
| 0,1 Teilen | Triäthylendiamin |
| 0,8 Teilen | eines Polyäther-polysiloxan-Blockcopolymeren (Tegostab B 4690) und |
| 40 Teilen | einer Mischung aus 2,4- und 2,6-Toluylen-diisocyanaten (Isomerenverhältnis 80 : 20) und Roh-MDJ im Gewichtsverhältnis 70 : 30. |

## Vergleichsbeispiel

Die obengenannte Füllkörpersäule mit einem Durchmesser von 10 cm und einer Höhe von 60 cm wird mit 155 g eines handelsüblichen Polyurethan-Blockweichschaums mit einem Raumgewicht von 33 g/Liter in Form von zylindrischen Segmenten mit einem Durchmesser von 10 cm und einer Höhe von 2 cm kompakt gefüllt, so daß das Volumen der Füllkörpersäule zu 100% mit Polyurethan-Schaumstoff gefüllt war.

Die gepackte Füllkörpersäule wurde analog den Angaben von Beispiel 1 mit der dort beschriebenen Öl-Wassermischung beschickt.

Die erhaltenen Ergebnisse der Beispiele 1 und 2 und des Vergleichsbeispiels sind in der folgenden Tabelle zusammengefaßt:

| | Beispiel 1 | 2 | Vergleichs- beispiel |
|---|---|---|---|
| | Schaumtyp hydrophober Polyurethan-Schaumstoff | hydrophober Polyurethan-Schaumstoff | handelsüblicher Polyurethan-Blockschaumstoff |
| Raumgewicht | 50 g/l | 45 g/l | 33 g/l |
| Schaummenge | 185 g | 165 g | 155 g |
| Anteil des Polyurethan-Schaumstoffvolumens am Gesamtbettvolumen | 80% | 80% | 100% |
| Durchflußgeschwindigkeit nach | | | |
| 2 min | 170 l/h | 180 l/h | 70 l/h |
| 3 min | 130 l/h | 150 l/h | 40 l/h |
| 5 min | 100 l/h | 100 l/h | 30 l/h |
| 7 min | 90 l/h | 80 l/h | 25 l/h |
| 10 min | 75 l/h | 70 l/h | 20 l/h |
| 15 min | 70 l/h | 70 l/h | 15 l/h |
| mittlere Ölaufnahme | 1500 g | 1300 g | 380 g |

Die Beispiele 1 und 2 und das Vergleichsbeispiel zeigen, daß nach dem erfindungsgemäßen Verfahren duch die Verwendung der speziellen hydrophoben Polyurethan-Schaumstoffe eine wesentliche Erhöhung des Ölaufnahmevermögens bewirkt wird und daß die Durchflußgeschwindigkeit durch Einhaltung eines bestimmten Verhältnisses von Volumenteilen an Polyurethan-Schaumstoffpartikel zu

**0 013 412**

Leervolumen am Gesamtvolumen erheblich gesteigert werden kann.

**Patentansprüche**

1. Verfahren zur Abtrennung von hydrophoben, organischen Flüssigkeiten aus Wasser, wobei man das verunreinigte Wasser drucklos durch ein mit Polyurethan-Schaumstoffpartikeln gefülltes, säulenförmiges Reaktionsgefäß strömen läßt und anschließend die absorbierte hydrophobe, organische Flüssigkeit aus den Polyurethan-Schaumstoffpartikeln auspreßt, daduch gekennzeichnet, daß das Reaktionsgefäß mit Polyurethan-Schaumstoffpartikeln aus einem hydrophoben offenzelligen Polyurethan-Schaumstoff, der

a) 2 bis 50 Gewichtsprozent, bezogen auf das Gesamtgewicht des Polyisocyanats und Polyols, einer hydrophobierend wirkenden Verbindung, die mindestens eine Gruppe mit einem Zerewitinoff-aktiven Wasserstoffatom besitzt und die einen Löslichkeitsparameter von 15,375 bis 21,525 $(J \cdot cm^{-3})^{1/2}$ aufweist, aus der Gruppe der
gegebenenfalls substituierten, gesättigten und ungesättigten aliphatischen Fettsäuren mit 10 bis 25 Kohlenstoffatomen im Molekül sowie deren Derivate,
Alkylenoxidanlagerungsprodukte an Fettsäureester und -amide oder
Butadienoligomeren mit Molekulargewichten von 500 bis 10 000, gebunden enthält, und der
b) reversibel deformierbar ist und im mit hydrophoben organischen Flüssigkeiten beladenen Zustand durch sein Eigengewicht und das Gewicht des verunreinigten Wassers zu weniger als 25% gestaucht wird,

in loser Schüttung oder durch Stapelung so gefüllt wird, daß bei vollständiger Füllung 50 bis 95 Volumenprozent des Gesamtvolumens aus Polyurethan-Schaumstoffpartikeln bestehen.

2. Verfahren nach Anspruch 1, dadurch gekennzeichnet, daß die hydrophoben, offenzelligen Polyurethan-Schaumstoffe Raumgewichte von 15 bis 200 g/l aufweisen.

**Claims**

1. A process for separating hydrophobic organic liquids from water by allowing the polluted water to flow through a column-like reaction vessel which is filled with polyurethane foam particles at atmospheric pressure, and subsequently pressing the absorbed hydrophobic organic liquid from the polyurethane foam particles, wherein the reaction vessel is filled, either loosely by pouring or by stacking, with particles of a hydrophobic open-celled polyurethane foam, which

a) countains in bonded form 2 to 50 percent by weight, based on the total weight of the polyisocyanate and polyol, of a hydrophobic compound which contains at least one group with a hydrogen atom capable of undergoing a Zerewitinoff reaction, has a solubility parameter of 15,375 to 21,525 $(J \cdot cm^{-3})^{1/2}$ and is selected from the group consisting of
optionally substituted, saturated or unsaturated aliphatic fatty acids having 10 to 25 carbon atoms in the molecule, and derivatives thereof,
alkylene oxide adducts of fatty acid esters and amides, and
butadiene oligomers having a molecular weight of from 500 to 10,000, and
b) is reversibly deformable and is compressed less than 25 percent by its own weight and the weight of the polluted water when loaded with the hydrophobic organic liquids,

in such a way that the polyurethane foam particles represent 50 to 95 percent of the total volume of the reactor when it is completely filled.

2. A process as claimed in claim 1, wherein the hydrophobic open-celled polyurethane foam has a density of from 15 to 200 g/l.

**Revendications**

1. Procédé pour séparer des liquides organiques hydrophobes de l'eau, dans lequel on fait couler l'eau contaminée à travers un récipient de réaction cylindrique, rempli de particules de polyuréthanne expansé, puis on exprime le liquide organique hydrophobe absorbé des particules de polyuréthanne expansé, caractérisé en ce que le récipient de réaction est chargé en vrac ou avec un certain tassement de particules de polyuréthanne expansé constituées en un poluréthanne expansé à pores ouverts hydrophobe, qui:

a) contient en liaison polymère 2 à 50% en poids par rapport au poids total du polyisocyanate et du polyol d'un composé rendant hydrophobe, qui comprend au moins un groupe avec un atome

8

**0 013 412**

d'hydrogène actif selon Zerewitinoff et possède un paramètre de solubilité de 15,375 à 21,525 $(J \cdot cm^{-3})^{1/2}$, choisi parmi
- les acides gras saturés ou non, éventuellement substitués, avec une molécule en $C_{10}$ à $C_{25}$, et leurs dérivés,
- les produits d'addition d'oxydes d'alkylène sur des esters et amides d'acides gras et
- les oligomères du butadiène avec des poids moléculaires de 500 à 10 000, et

b)  est déformable de manière réversible et est comprimé à moins de 25% sous le poids de l'eau contaminée et par son propre poids après l'asorption de liquides organiques hydrophobes,

de telle façon qu'après le remplissage complet, entre 50 et 95% du volume total sont occupés par les particules de polyuréthanne expansé.

2. Procédé suivant la revendication 1, caractérisé en ce que les polyuréthannes expansés à pores ouverts hydrophobes possèdent des masses volumiques comprises entre 15 et 200 g/l.